# FASCICULE DE BREVET EUROPEEN

(11) **EP 0 937 997 B1**
(45) Date de publication et mention de la délivrance du brevet: **24.11.2004**
(21) Numéro de dépôt: 99400312.7
(22) Date de dépôt: 10.02.1999
(51) Int. Cl.: G01V 1/42, G01V 1/047

(54) **Methode de surveillance sismique permanente d'une formation souterraine**
Verfahren zur permanenten seismischen Überwachung von untererdischen Formationen
Method for permanent seismic surveillance of a subsurface environment

(30) Priorité: 20.02.1998 FR 9802170
(43) Date de publication de la demande: 25.08.1999
(73) Titulaire: Institut Français du Pétrole, 92852 Rueil-Malmaison Cedex (FR); GAZ DE FRANCE (SERVICE NATIONAL), F-75017 Paris (FR); COMPAGNIE GENERALE DE GEOPHYSIQUE, F-91341 Massy Cédex (FR)
(72) Inventeur: Laurent, Jean, 78630 Orgeval (FR); Huguet, Frédéric, 93800 Epinay (FR)

(56) Documents cités:
- DE-C- 697 036
- FR-A- 2 688 896
- FR-A- 2 728 973
- GB-A- 2 323 443
- US-A- 5 171 943
- US-A- 5 461 594
- US-A- 5 481 502
- DATABASE INSPEC INSTITUTE OF ELECTRICAL ENGINEERS, STEVENAGE, GB Inspec No. 5852183, SMIDT J M: "A limitation of well velocity surveys in highly deviated wells drilled parallel to bedding" XP002102840 & GEOPHYSICS, MAY-JUNE 1996, SOC. EXPLORATION GEOPHYSICISTS, USA, vol. 61, no. 3, pages 627-630, ISSN 0016-8033

## Description

La présente invention concerne une méthode de surveillance sismique permanente d'une zone souterraine.

Un dispositif de surveillance sismique permanente peut être utilisé notamment pour réaliser une surveillance sismique à long terme d'une zone souterraine contenant des fluides : zones de production pétrolière, réservoirs souterrains de stockage de gaz, etc., et suivre son évolution au cours du temps.

Il est connu par exemple de tester le remplissage d'un réservoir souterrain destiné à stocker du gaz naturel à des instants successifs de son utilisation, au moyen d'un système sismique comportant un vibrateur ou une source impulsionnelle pour appliquer des ébranlements à la surface du sol et un dispositif de réception comportant des alignements de capteurs d'ondes élastiques disposés en surface ou dans un puits et couplés avec le sol. L'injection de gaz modifiant de façon significative la vitesse du son, la densité et donc l'impédance acoustique de la formation-réservoir, on peut déterminer la variation de l'écart en temps sur les enregistrements sismiques, entre deux réflecteurs situés l'un au-dessus, l'autre au-dessous du réservoir. On peut aussi suivre l'évolution du remplissage, en mesurant la variation de l'amplitude des ondes qui se sont réfléchies au niveau des couches du réservoir, à des instants successifs du remplissage.

Par les brevets FR 2.593.292 (US 4,775,009), FR 2.642.849 (US 4,986,350), FR 2.656.034 (US 5,181,565), FR 2.688.896, FR 2.689.647 (US 5,481,502), notamment. on connaît des systèmes comportant un ou plusieurs ensembles d'intervention installés à poste fixe dans des puits reliés à la surface par une ou plusieurs voies de transmission. Ces ensembles d'intervention peuvent être des récepteurs sismiques et aussi éventuellement une ou plusieurs sources d'ondes sismiques disposées dans des puits. Les ensembles de récepteurs ou d'émetteurs peuvent être placés à l'extérieur de tubes de cuvelage ou casings et couplés avec les formations environnantes par le ciment injecté dans l'espace annulaire autour de ces tubes une fois qu'ils ont été mis en place. Les ensembles de récepteurs peuvent aussi être associés à un tube de production (tubing) descendu dans un puits et couplés avec les formations environnant le puits si on les plaque contre la paroi du puits directement ou par l'intermédiaire d'un tube de cuvelage ou casing par exemple.

Par les brevets FR 2.703.457, FR 2.703.470 ou FR 2.674.029 (US 5,243,562), on connaît des méthodes de surveillance sismique de gisements souterrains au moyen d'ensembles de récepteurs placés dans des puits et de sources sismiques disposées à la surface du sol ou éventuellement dans ces mêmes puits.

La reconnaissance sismique du sous-sol s'opère d'une façon générale en couplant avec le sol des sources sismiques et des récepteurs, suivant différentes combinaisons où les sources et/ou les récepteurs sont disposés à la surface ou à son voisinage ou dans un ou plusieurs puits au travers de la formation explorée.

On réalise des séries de cycles d'émission-réception sismique en changeant à chaque fois l'emplacement de la source sismique par rapport à l'axe du puits où les ensembles de récepteurs sont installés, suivant une technique dite de "walk-away", et en enregistrant les arrivées aux récepteurs R1 à Rn en fonction du temps de propagation t.

La surveillance de gisements pétrolifères ou des réservoirs de stockage en gaz implique généralement des opérations de longue durée car les variations à observer sont relativement lentes.

Par le brevet FR 2.728.973 (US 5,724,311), des demandeurs, on connaît un système de surveillance permanente permettant d'obtenir une parfaite reproductibilité des conditions opératoires dans des opérations répétitives de surveillance sismique d'une zone souterraine traversée par au moins un puits ou forage, et notamment d'un réservoir souterrain de stockage de gaz. Ce système comporte, installés à poste fixe, un ou plusieurs ensemble(s) de récepteurs sismiques (enterrés en surface ou placés dans un ou plusieurs puits), plusieurs sources sismiques répétitives (enterrées ou en surface) ainsi que d'un réseau de liaison permanente pour l'alimentation sélective de ces sources en énergie. Une station centrale télécommande sélectivement chacune de ces sources, et enregistre les signaux sismiques émanant de la zone souterraine en réponse aux ondes sismiques transmises sélectivement dans le sol par les sources.

Grâce à cet ensemble de sources à poste fixe dont le couplage avec les terrains environnant reste stable, et à ce réseau d'alimentation au moins en partie enterré et dont l'aire d'emprise en surface est réduite, on peut mener toute une série d'opérations sismiques de surveillance de longue durée dans des conditions opératoires stables, sans risque d'incompatibilité avec les activités du chantier d'exploitation.

La méthode de surveillance permanente d'une formation souterraine selon l'invention permet de simplifier encore plus les opérations d'installation à poste fixe, d'au moins un ensemble d'émission-réception sismique comportant une source sismique et des récepteurs sismiques, et tout à la fois de diminuer son aire d'emprise au sol.

La méthode comporte l'utilisation d'au moins un ensemble de surveillance sismique comprenant des récepteurs sismiques que l'on place dans un puits et que l'on couple avec la formation environnante et une source sismiques, et la réalisation de cycles d'émission-réception avec émission d'ondes sismiques dans la formation et acquisition des signaux captés par les récepteurs sismiques, en réponse aux ondes renvoyées par la formation. Chaque ensemble de surveillance comporte une source sismique dans une cavité située dans le prolongement supérieur du puits où est placée une série de récepteurs sismiques, les récepteurs sismiques et la source sismique de l'ensemble étant couplés de façon permanente avec la formation pour obtenir des conditions opératoires stables, la méthode comportant l'enregistrement par les récepteurs sismiques des ondes renvoyées par la formation en réponse à l'émission des ondes émises dans le même puits par la source associée.

Les récepteurs sont par exemple associés avec un tube de transfert de fluides descendu dans le puits, dans le but de relier une zone souterraine à un appareil d'exploitation en surface et couplés avec la formation environnant le puits.

De préférence, les cavités sont assez profondes pour que la source soit couplée avec la formation au-dessous de la zone altérée.

Lorsqu'une cavité est formée dans la partie supérieure d'un puits destiné aux récepteurs, la méthode comporte de préférence l'interposition en cas de besoin, de moyens d'atténuation d'ondes de tube entre la source et le fond de la cavité.

De tels puits et cavités peuvent bien entendus être forés au fond d'une masse d'eau, pour l'installation à demeure de un ou plusieurs ensembles de surveillance sismique.

La cavité est formée par exemple par élargissement de la section du puits.

Chaque ensemble d'émission-réception sismique est installé à demeure dans un seul et même puits dont la surface d'emprise au sol est relativement faible. Le forage de ce puits peut être réalisé facilement avec les équipements de forage classiques ou d'excavation. Le dispositif est de ce fait facilement intégrable sur les chantiers d'exploitation de gisements ou de stockage de fluides. Les sources étant plaquées avec le fond ou les parois de cavités de préférence assez profondes pour atteindre les terrains sous la zone altérée, leur couplage avec la formation est ainsi amélioré.

D'autres caractéristiques et avantages de la méthode et du dispositif selon l'invention, apparaîtront à la lecture de la description ci-après d'un exemple non limitatif de réalisation, en se référant aux dessins annexés où :
- la Fig.1 montre schématiquement un ensemble d'émission-réception sismique en place dans un puits unique ;
- la Fig.2 montre schématiquement un ensemble d'émission-réception sismique en place dans un puits équipé pour l'exploitation d'un gisement;
- la Fig.3 montre schématiquement un ensemble d'émission-réception sismique dans deux puits voisins;
- la Fig.4 montre schématiquement une disposition d'ensembles d'émission-réception sismique comprenant un puits central pour une source et un ou plusieurs puits périphériques pour des récepteurs sismiques; et
- la Fig.5 montre une disposition possible de puits pour des ensembles d'émission-réception sismique, répartis sur un site d'exploitation d'un gisement.

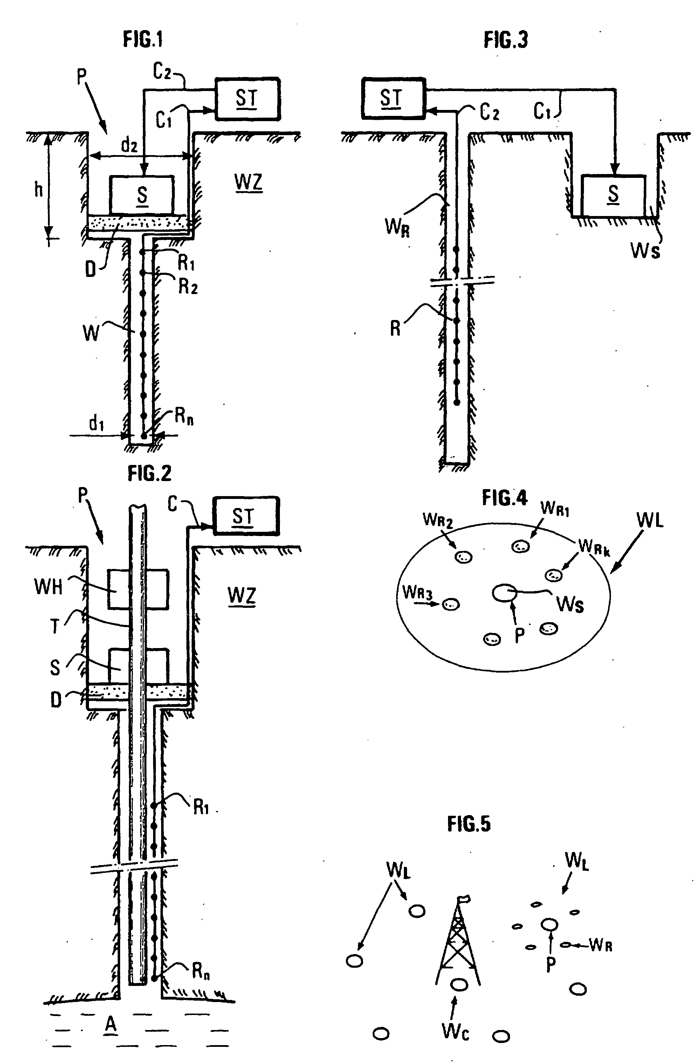

Suivant le mode de réalisation de la Fig. 1, le dispositif comporte au moins un ensemble d'émission-réception sismique comprenant une source sismique S et une série de récepteurs sismiques R1, R2, ..., Rn, disposés sous la surface du sol. Un puits W est foré tout d'abord à un premier diamètre d1 plus ou moins large selon qu'il est destiné à des opérations de pure exploration ou bien de surveillance de l'exploitation d'un gisement recélant des fluides.

Ensuite, on élargit la partie supérieure du puits 1 ainsi foré de façon à former une cavité P de dimension d2 suffisante pour y loger au moins une source S. et d'une certaine profondeur h.

La source S est couplée avec le fond et/ou les parois de la cavité P, soit directement soit par l'intermédiaire d'une couche D d'un matériau absorbant les ondes élastiques, destinée à empêcher la propagation directe vers les récepteurs R, des ondes parasites dites de tube.

Comme source, on peut utiliser soit une source impulsionnelle du type canon à gaz par exemple, soit un vibrateur d'un type connu. Il peut s'agir d'un vibrateur à volants excentrés, d'un vibrateur électro-hydraulique ou électro-acoustique d'un vibrateur de type piézo-électrique ou magnétostrictif, analogues à ceux décrits par exemple dans les brevets FR 2.656.110 (US 5,135,072) et FR 2.667.518. Plusieurs vibrateurs peuvent être plaqués contre les parois de chaque cavité et actionnés en parallèle.

De préférence, on creuse suffisamment profond (h est généralement de l'ordre de quelques mètres à quelques dizaines de mètres) pour que le fond de la cavité P se trouve sous la zone de surface dite altérée (WZ), de façon à éviter les effets parasites connus liés à l'instabilité de cette zone.

L'ensemble de récepteurs sismiques R1 à Rn est placé dans le puits W et couplé avec la formation environnant le puits. Ces récepteurs peuvent être des géophones, de préférence multi-axes (des triphones par exemple) et/ou des hydrophones, placés à distance les uns des autres le long du trou.

Le dispositif comporte une station ST de commande de la source et d'acquisition des signaux produits par les récepteurs R en réponse aux ondes sismiques reçues. La station ST est connectée avec la source S par un câble multi-conducteurs C1 et avec les récepteurs R1-Rn par un câble C2.

Le couplage des géophones avec la formation peut être réalisé en les noyant dans du ciment que l'on coule dans le puits après leur mise en place. Quand au moins une partie des récepteurs comporte aussi des hydrophones couplés avec les formations environnant le puits par immersion dans du fluide, on associe aux géophones des moyens de couplage d'un type connu à lames flexibles par exemple, comme décrits notamment dans le brevet US 2 943 694.

Suivant un agencement décrit déjà dans les brevets FR 2.593.292 (US 4.775.009), FR 2.703.457 et FR 2.276.723 déjà cités, les géophones peuvent être placés derrière un tube de cuvelage (casing) du puits et couplés avec la formation par le ciment servant au scellement du casing après sa mise en place.

Les récepteurs R1-Rn peuvent également être placés à distance les uns des autres le long d'un tube rigide tel qu'un tubing et associés à des moyens permettant de les plaquer contre la paroi du puits W, tout en les découplant acoustiquement du tube.

Dans les applications où le dispositif est destiné à la surveillance sismique d'un puits d'exploitation d'un gisement souterrain recélant des fluides, qu'il s'agisse d'un gisement producteur de fluides ou d'un réservoir de stockage de gaz par exemple, les récepteurs sont placés (Fig.2) le long d'un tubing T de transfert de fluides reliant la zone souterraine exploitée à un équipement d'exploitation (non représenté) en surface, ce tubing étant terminé par une tête de puits WH. On peut utiliser les modes de couplage sélectifs déjà décrits dans les brevets FR 2.656.034 (US 5.181.565) et FR2.674.029 (US 5.243.562). Dans ce type d'applications, on dispose la source S dans la cavité à côté ou autour du tubing T.

Suivant le mode de réalisation de la Fig.3, on peut également disposer les récepteurs et la source d'ondes élastiques dans deux puits distincts W_{R} et W_{S}.

De préférence, on associe à un même puits W_{S} pour source sismique, k puits (k ≥2), W_{R1},W_{R2}, ..., W_{Rk} pour récepteurs sismiques répartis (Fig.4) autour du puits pour la source. Plusieurs ensembles comportant une source et des récepteurs dans la configuration W_{L} schématisée à la Fig.3 ou 4, peuvent ainsi être répartis sur le terrain.

Suivant le mode de mise en oeuvre de la Fig.5, il est possible de répartir une pluralité d'ensembles d'émission-réception comme ceux schématisés aux Fig.1 ou 2, dans des puits sur un chantier d'exploitation d'un gisement, autour d'un puits central W_{C} communiquant avec le gisement et affecté au transfert de fluides.

Dans le puits de production, l'ensemble d'émission-réception est du type schématisé à la Fig.2. Pour les ensembles d'émission-réception dans les puits périphériques (configuration W_{L}), on utilise les agencements schématisés aux Fig.1, 3 ou 4.

Plusieurs ensembles d'émission-réception étant installés ainsi dans une zone d'observation, on peut procéder à des acquisitions sismiques croisées avec déclenchement d'une quelconque source sismique et réception-acquisition des ondes émanant de la formation en réponse aux ondes émises.

Les puits destinés à loger ces ensembles d'émission-réception peuvent être facilement creusés avec des équipements de forage ou d'excavation classiques. On peut forer par exemple des puits W de quelques centaines de mètres de profondeur et de diamètre de l'ordre de 17 cm (7"), et des cavités P de diamètre de l'ordre de 50 cm (20"). L'emprise au sol de ces ensembles d'émission-réception enterrés est faible et leur activité de surveillance est de ce fait tout à fait compatible avec les opérations d'exploitation.

Il est bien évident que de tels ensembles d'émission-réception peuvent aussi bien être enfouis dans des puits forés au fond d'une masse d'eau, dans une zone autour d'un site d'exploitation au large (offshore).

## Revendications

1. Méthode de surveillance sismique d'une formation souterraine en cours d'exploitation, au moyen d'au moins un ensemble de surveillance sismique comprenant des récepteurs sismiques (R1-Rn) que l'on place dans un puits (W) et que l'on couple avec la formation environnante et une source sismique (S), dans laquelle on réalise des cycles d'émission-réception avec émission d'ondes sismiques dans la formation et acquisition des signaux captés par les récepteurs sismiques, en réponse aux ondes renvoyées par la formation, **caractérisée en ce que** chaque ensemble de surveillance comporte une source sismique (S) dans une cavité (P) située dans le prolongement supérieur du puits (W) où est placée une série de récepteurs sismiques, les récepteurs sismiques et la source sismique de l'ensemble étant couplés de façon permanente avec la formation pour obtenir des conditions opératoires stables, la méthode comportant l'enregistrement par les récepteurs sismiques des ondes renvoyées par la formation en réponse à l'émission des ondes émises dans le même puits par la source associée.

2. Méthode selon la revendication 1, **caractérisée en ce que** l'on réalise des cycles d'émission-réception avec au moins un ensemble de surveillance et des récepteurs sismiques dans un puits d'exploitation de la formation pourvu d'un équipement d'exploitation.

3. Méthode selon la revendication 2, **caractérisée en ce qu'**elle comporte l'utilisation de récepteurs (R) associés à un tube (T) de transfert de fluides descendu dans le puits, dans le but de relier une zone souterraine (A) à un appareil d'exploitation en surface, et couplés avec la formation environnant le puits.

4. Méthode selon l'une des revendications précédentes, **caractérisée en ce que** l'on fore au moins une cavité (P) pour une source (S) sur une profondeur suffisante pour que la source soit couplée avec la formation au-dessous de la zone de surface dite altérée (WZ).

5. Méthode selon l'une des revendications précédentes, **caractérisée en ce qu'**elle comporte l'utilisation d'un ensemble de surveillance pourvu de moyens (D) d'atténuation d'ondes de tube intercalé entre la source et la formation.

6. Méthode selon l'une des revendications précédentes, **caractérisée en ce que** l'on utilise une source sismique comprenant au moins un vibrateur.

7. Méthode selon l'une des revendications 1 à 6, **caractérisée en ce que** la cavité est formée par élargissement de la partie supérieure du puits.

8. Méthode selon l'une des revendications précédentes, **caractérisée en ce qu** elle comporte l'installation à demeure d'au moins un ensemble de surveillance sismique au fond d'une masse d'eau.

## Patentansprüche

1. Verfahren zur seismischen Überwachung einer unterirdischen Formation bei der Untersuchung mit wenigstens einer seismischen Überwachungsanordnung, welche seismische Empfänger (R1-Rn) umfasst, die man in einem Bohrloch (W) anordnet, und die man mit der umgebenden Formation und einer seismischen Quelle (S) koppelt, in dem man Sende-/Empfangszyklen mit Aussendung seismischer Wellen in der Formation und Aufzeichnung der durch die seismischen Empfängern erfassten Signale in Erwiderung auf durch die Formation zurückgesandte Wellen durchführt, **dadurch gekennzeichnet, dass** jede Überwachungsanordnung eine seismische Quelle (S) in einer Höhlung (P) umfasst, die in der oberen Verlängerung des Bohrlochs (W) angeordnet ist, wo eine Reihe seismischer Empfänger angeordnet ist, wobei die seismischen Empfänger und die seismische Quelle der Anordnung permanent mit der Formation gekoppelt sind, um stabile Betriebsbedingungen zu erhalten, wobei das Verfahren die Aufzeichnung durch die seismischen Empfänger von Wellen umfasst, die durch die Formation in Erwiderung der Aussendung der in demselben Bohrloch durch eine verbundene Quelle ausgesandten Wellen zurückgesandt werden.

2. Verfahren nach Anspruch 1, **dadurch gekennzeichnet, dass** man Sende-/Empfangszyklen mit wenigstens einer Überwachungsanordnung und seismischen Empfängern in einem Untersuchungsbohrloch der Formation, versehen mit einer Untersuchungsausrüstung, durchführt.

3. Verfahren nach Anspruch 2, **dadurch gekennzeichnet, dass** es die Verwendung von Empfängern (R) umfasst, die in einem Rohr (T) zur Überführung von in das Bohrloch absteigenden Fluiden zugeordnet sind, mit dem Ziel, eine unterirdische Zone (A) mit einem Untersuchungsapparat an der Oberfläche zu verbinden und gekoppelt mit der das Bohrloch umgebenden Formation.

4. Verfahren nach einem der vorhergehenden Ansprüche, **dadurch gekennzeichnet, dass** man wenigstens eine Höhlung (P) für eine Quelle (S) über eine Tiefe bohrt, die ausreichend ist, damit die Quelle mit der Formation unter der verändert genannten Oberflächenzone (WZ) gekoppelt ist.

5. Verfahren nach einem der vorhergehenden Ansprüche, **dadurch gekennzeichnet, dass** es die Verwendung einer Überwachungsanordnung umfasst, die mit Mitteln (D) zur Dämpfung von Wellen eines Rohrs versehen ist, das zwischen die Quelle und die Formation eingefügt ist.

6. Verfahren nach einem der vorhergehenden Ansprüche, **dadurch gekennzeichnet, dass** man eine seismische Quelle verwendet, die wenigstens einen Vibrator umfasst.

7. Verfahren nach einem der Ansprüche 1 bis 6, **dadurch gekennzeichnet, dass** die Höhlung durch Verbreiterung des oberen Teils des Bohrlochs gebildet ist.

8. Verfahren nach einem der vorhergehenden Ansprüche, **dadurch gekennzeichnet, dass** es die feste Installation wenigstens einer seismischen Überwachungsanordnung am Boden einer Wassermasse umfasst.

## Claims

1. Method for seismic surveillance of a subterranean formation in production by means of at least one seismic surveillance array comprising seismic receivers (R1-Rn) which is placed in a well (W) and coupled with the surrounding formation and a seismic source (S), in which transmitting-receiving cycles are produced entailing transmission of seismic waves into the formation and acquisition of the signals picked up by the seismic receivers in response to the waves sent back by the formation, ***characterised in that*** each surveillance array comprises a seismic source (S) in a cavity (P) located in the upper extension of the well (W) in which is placed a series of seismic receivers, the seismic receivers and the seismic source of the array being coupled permanently to the formation to obtain stable operating conditions, the method comprising recording by the seismic receivers of the waves sent back by the formation in response to the transmission of the waves transmitted in the same well by the associated source.

2. Method according to claim 1, ***characterised in that*** transmitting-receiving cycles are produced with at least one surveillance array and seismic receivers in a production well of the formation provided with production equipment.

3. Method according to claim 2, ***characterised in that*** it comprises the use of receivers (R) associated with a tube (T) for transfer of fluids lowered into the well with the object of linking a subterranean zone (A) to a production apparatus on the surface, and coupled with the formation surrounding the well.

4. Method according to one of the preceding claims, ***characterised in that*** at least one cavity (P) for a source (S) is drilled to a sufficient depth for the source to be coupled with the formation below the so-called weathered surface zone (WZ).

5. Method according to one of the preceding claims, ***characterised in that*** it comprises the use of a surveillance array provided with means (D) for attenuation of tube waves interposed between the source and the formation.

6. Method according to one of the preceding claims, ***characterised in that*** a seismic source is used comprising at least one vibrator.

7. Method according to one of claims 1 to 6, ***characterised in that*** the cavity is formed by enlarging the upper portion of the well.

8. Method according to one of the preceding claims, ***characterised in that*** it comprises the permanent installation of at least one seismic surveillance array at the bottom of a mass of water.
